# EUROPÄISCHE PATENTANMELDUNG

(11) **EP 1 684 100 A2**
(43) Veröffentlichungstag der Anmeldung: **26.07.2006**
(21) Anmeldenummer: 05026794.7
(22) Anmeldetag: 08.12.2005
(51) Int. Cl.: G02B 6/00

(54) **Optoelektronisches Bauelement mit integrierter Wellenleiter-Ankopplung für passive Justage**

(30) Priorität: 21.01.2005 DE 102005002874
(71) Anmelder: Forschungszentrum Karlsruhe GmbH, 76133 Karlsruhe (DE)
(72) Erfinder: Schneider, Marc, 76297 Stutensee (DE); Kühner, Thomas, 76470 Ötigheim (DE)

(57) **Zusammenfassung**

Optoelektronisches Bauelement mit integrierter Ankopplung für mindestens einen Wellenleiter (1) für passive Justage, umfassend mindestens eine photoemittierende oder photosensitive Fläche (15) mindestens eines optoelektronischen Wandlers (5) mit mindestens zwei elektrischen Anschlüssen, mindestens ein Führungsbauteil (4) mit mindestens einer Nut (9) für mindestens ein Wellenleiterende, Wellenleiterverbindungen zwischen den Wellenleiterenden und den photoemittierenden oder photosensitiven Flächen sowie Fixierungsmittel für die Wellenleiterenden in den Nuten. Aufgabe ist es, ein optoelektronisches Bauelement vorzuschlagen, welches sich bereits von seinem Konzept her für die vorgenannte selbst justierende passive Applikation eignet. Die Aufgabe wird durch ein optoelektronisches Bauelement gelöst, wobei die Wellenleiterverbindung die Führungsbauteile (4) umfassen, die Führungsbauteile (4) aus einem optisch transparenten Material gefertigt sind sowie die Wellenleiterenden auf Führungsbauteilseitige Wellendurchtrittsflächen fluchten.

## Beschreibung

Die Erfindung betrifft ein optoelektronisches Bauelement mit integrierter Wellenleiter-Ankopplung für passive Justage gemäß dem ersten Patentanspruch.

Elektrische Verbindungen in Form von Leiterbahnen auf und in Leiterplatten werden bereits seit langem eingesetzt. Mit steigenden Frequenzen, langen Übertragungsstrecken und sinkenden Pegeln zur Signalübertragung auf solchen Leiterbahnen steigen jedoch die Störanfälligkeit und die Dämpfung der Signale immer weiter an.

Vor allem in der Telekommunikation ist man deswegen bereits seit geraumer Zeit dazu übergegangen, Informationen, Daten oder Signale über größere Entfernungen mittels optischer Signale in Glasfasern zu übertragen. Derartige Übertragungsstrecken zeichnen sich durch eine geringe Störanfälligkeit und Störabstrahlung bei der Übertragung aus, bieten eine Potentialtrennung zwischen Sender und Empfänger und sind für höchste Datenraten geeignet.

Vergleichsweise neu ist die Anwendung dieser optisch gestützten Übertragungstechniken auch für kürzere Übertragungsstrecken, typischerweise im Bereich weniger Zentimeter bis wenige Meter, beispielsweise über Lichtleitfasern in oder auf Leiterplatten.

Beispielhaft offenbart [1] eine Leiterplatte mit integrierten Lichtleitfasern. Bei der Herstellung dieser optischen Leiterplatten wird der Ansatz verfolgt, Wellenleiter in einem ersten Schritt in Polymerschichten zu erzeugen, um sie anschließend als separate Lage in einem Mehrlagen-Leiterplattenverbund zu verpressen. Hierbei stehen neben der Kompatibilität von verwendeten Materialien und Verarbeitungsschritten der Wellenleiter zu einem etablierten Herstellungsprozess für Leiterplatten vor allem die geeignete Wandlung der elektrischen Signale in optische und deren Kopplung in den Wellenleiter im Vordergrund.

Eine Wandlung oder Kopplung stellt jedoch eine besondere Anforderung an die Justierung von Wellenleitern untereinander oder zu elektro-optischen Wandlern wie Lichtquellen oder Lichtempfangseinheiten wie Photodioden. Das Erfordernis einer exakten Justierung für eine hohe Übertragungsqualität auf einem hohen Reproduzierbarkeitsniveau machen jedoch sehr aufwendige Verfahrensschritte bei der Herstellung erforderlich. Oft muss jede einzelne Verbindung (Kopplung) aktiv, d.h. unter Einsatz einer positionierenden Aktorik für den Wellenleiter und Wandlerelement justiert werden.

Eine kostengünstige Umsetzung eines Kopplungsverfahren zur exakten Verbindungserstellung ist jedoch Grundvoraussetzung für eine industrielle Fertigung. Der vorgenannte Stand der Technik eignet sich insbesondere aufgrund einer komplexen Handhabung nur bedingt für eine Einbindung in bestehende Leiterplattenherstellungsverfahren. Eine selbst justierende, d.h. passive Applikation von optoelektronischen Bauelementen, welche einer automatisierbaren Justierung grundsätzlich entgegenkommen würde, ist gemäß des Stands der Technik nicht vorgesehen.

Insofern besteht die **Aufgabe der Erfindung** darin, ein optoelektronisches Bauelement vorzuschlagen, welches die genannten Einschränkungen nicht aufweist, sich insbesondere bereits von seinem Konzept her grundsätzlich für die vorgenannte selbst justierende passive Applikation eignet.

Die Montage der optoelektronischen Bauelemente soll mit gängigen Bestückungsautomaten im Rahmen eines Leiterplattenherstellungsverfahrens durchführbar sein, idealer weise mit anderen elektronischen Bauteilen einer Baugruppe in einem Montageschritt. Ebenso muss sich eine elektrische Kontaktierung des Koppelements in bestehende Prozesse (z.B. Löten) der Baugruppenfertigung einfügen.

Die Aufgabe wird durch ein optoelektronisches Bauelement gemäß des ersten Anspruchs gelöst. Unteransprüche geben vorteilhafte Ausgestaltungen wieder.

Die Erfindung umfasst mindestens eine photosensitive (für Wandlung eines optischen Wellensignals in ein elektrisches Signal, z.B. über eine Photodiode) oder photoemittierende (für Wandlung eines elektrischen Signals in ein optisches Wellensignal, z.B. über eine Laserdiode) Fläche mindestens eines photoelektrischen Wandlers mit mindestens zwei elektrischen Anschlüssen, mindestens ein Führungsbauteil mit mindestens einer Nut für mindestens ein Wellenleiterende, eine Wellenleiterverbindung zwischen den Wellenleiterenden und den photoemittierenden oder photosensitiven Flächen. Das Führungsbauteil, das direkt oder indirekt relativ zur Fläche des Wandlers fixiert ist, dient der eindeutigen Positionierung und Ausrichtung des Wellenleiterendes entweder direkt oder indirekt über eine Umlenkung über die Wellenleiterverbindung in Richtung der vorgenannten Fläche des Wandlers.

Die Montage des optoelektronischen Bauelements ist aufgrund seiner geringen Größe und der passiven Justage leicht automatisierbar. Montagetoleranzen der automatischen Bestückungseinrichtung (kleine Justagefehler) können durch die Form und Größe der bevorzugten V-Nut ausgeglichen werden. Dabei wird das Führungsbauteil einstückig oder aus wenigen Teilen hergestellt, vorzugsweise im kostengünstigen Kunststoff-Spritzgussverfahren, Prägeverfahren oder in einem Tauchverfahren.

Die Erfindung zeichnet sich in vorteilhafter Weise durch eine Platz sparende und zuverlässige Ankopplung eines photoelektrischen Wandlers an das Ende eines optischen Wellenleiters aus. Eine Montage erfolgt beispielsweise durch einfaches Aufsetzen des Bauteils mit dem Führungsbauteil auf ein Wellenleiterende, wobei dieses über vorhandene Kräfte wie an das Bauteil angreifende Schwerkräfte oder aufgeprägte Kräfte in die Nut im Führungsteil passiv hineinrutscht. Eine aktive Justage dieser Komponenten wird dadurch vermieden.

Es bietet sich an, die Wellenleiterenden und die Nuten elektrisch leitfähig zu gestalten, vorzugsweise über eine Metalloberfläche vorzugsweise über elektrisch leitende Einlegeteile oder aufgesputterte oder aufgedampfte Metallisierungen (PVD-oder CVD-Prozesstechnik). Legt man zwischen Wellenleiterende und Nuten einen elektrischen Potentialunterschied an, entsteht ein elektrisches Feld und in Folge dessen in vorteilhafter Weise eine elektrostatische Anziehungskraft zwischen den Elektroden. Dadurch wird nicht nur die exakte Justage eines Wellenleiterendes in der Nut erheblich unterstützt. Die angreifenden elektrostatischen Kräfte wirken zudem beschleunigend auf den Einbringungsprozess der Applizierung der Wellenleiterenden in der Nut.

Bei der Montage wird das Bauelement vor der endgültigen Befestigung durch die zusätzliche Auflage auf die elektrischen Anschlüsse bildenden Metallbeine stabilisiert. Ideal dabei sind drei Auflagepunkte, die eine statische Stabilität bewirken, beispielsweise über die beiden Anschlüsse und einen (elastischen) Wellenleiter. Aber auch zwei Wellenleiter, die gemeinsam an ein Bauteil angeschlossen sind, sind für eine stabile Auflage (zwei linienförmige Auflagebereiche) heranziehbar.

Nach der Befestigung nehmen die nunmehr auf Leiterbahnen der Platine angelöteten Anschlüsse eventuell auf das Bauelement einwirkende Kräfte auf und entlasten den Wellenleiter.

Die Erfindung beruht auf einem optoelektronischen Bauteil mit integriertem Führungsbauteil, das auf einen optischen Wellenleiter mit definierten Abmessungen (z.B. optische Glasfasern) aufgesetzt und anschließend fest mit ihm verbunden wird. Übliche Wellenleiter wie Glasfasern weisen die geforderte hohe Genauigkeit auf und verfügen im Gegensatz zu Polymerwellenleitern über eine geringe optische Dämpfung und im Hinblick auf die Leiterplattenfertigung über günstigere mechanische Eigenschaften (Druck, Temperatur).

Fertigungsschwankungen und Einflüsse des Herstellungsprozesses der Leiterplatte, die wiederum die exakte Lage des Wellenleiters in der Leiterplatte bestimmen, haben somit nur geringen Einfluss auf die genaue Ausrichtung von Führungsbauteil und Wellenleiterende zueinander. Die Ausrichtung erfolgt am Wellenleiterende selbst, und zwar in vorteilhafter Weise auch bei den in elektronischen Schaltungen üblichen sehr beengten Platzverhältnissen; zusätzliche Montagehilfen wie z.B. (Präzisions-)Bohrungen etc. in oder auf einer Leiterplatte oder anderen Komponenten sind nicht erforderlich.

Ein Fixierungsmittel, vorzugsweise ein an das Führungsbauteil reversibel angreifende Clipverbindung dient der Fixierung der Wellenleiterenden nach Applizieren des optoelektronischen Bauteils in den Nuten. Der Clip ist optional irreversibel verkleb- oder verschweißbar.

Die Wellenleiterverbindung ist ein optisches Übertragungselement für optische Signale zwischen Wellenleiterende und der je nach Wandlungsrichtung als photoemittierenden oder photosensitiven ausgelegten Fläche des optoelekrischen Wandlers und erstreckt sich vorzugsweise zumindest Bereichsweise über das Führungsbauteil. Konsequenterweise ist das Führungsbauteil aus einem Material gefertigt, welches für die jeweils durch die Wellenleiterverbindung zu übertragenden Wellenlänge durchlässig, d.h. optisch transparent ist. Die Einkopplung eines Wellenstrahls, z.B. eines Lichtsignals aus dem Wellenleiterende in die Wellenleiterverbindung erfolgt über Führungsbauteil seitige Wellendurchtrittsflächen.

Die Erfindung nutzt die Möglichkeit einer direkten Ausrichtung eines optoelektronischen Bauelementes auf dem Wellenleiter im Bereich des Wellenleiterendes aus, was voraussetzt, dass das Wellenleiterende in einem begrenzten Bereich frei zugänglich ist.

Hierzu ist auf dem Bauelement eine Führung für mindestens ein Wellenleiterende vorgesehen, vorzugsweise als Nut im vorgenannten Führungsbauteil, in die das Wellenleiterende eingebracht und exakt justiert wird. Vorzugsweise ist die Nut als V-Nut gestaltet, in der der vorzugsweise zylinderförmige Wellenleiter wie z.B. eine optische Glaseinzelfaser, eine transparente Kunststoffleiste oder ein Glasfaserbündel etc. über zwei Berührungslinien in eindeutiger Weise lateral justiert ist. Bevorzugt endet die Nut mit einem Anschlag für die Stirnfläche des Wellenleiters als axiale Justierung im Führungsbauteil. Dabei bietet es sich an, diesen Anschlag als Aus- oder Eintrittsfläche (je nach Wandlungsrichtung des optoelektronischen Bauelements), d.h. als die vorgenannte Wellendurchtrittsfläche für die aus dem Wellenende emittierenden optischen Signale (Wellenstrahls) zu gestalten.

Die Aus- und Eintrittsfläche können ebenso wie andere Teile der Wellenleiterverbindung als Filter oder Manipulator für die durchtretenden Wellenstrahlen (Lichtstrahlen) gestaltet sein.

Die genannte Aus- oder Eintrittsfläche ist im Rahmen der Erfindung Teil des Führungsbauteils und weist bevorzugt eine optische Qualität auf, d.h. eine Oberflächenrauhigkeit, die einen ein- oder austretenden Wellenstrahl, z.B. einen sichtbaren oder unsichtbaren Lichtstrahl, nur zu einem geringen Anteil streut, wie z.B. zu 5%, bevorzugt zu 1%, weiterhin bevorzugt zu 0,1% der gesamten Intensität des Wellenstrahls. Die Rauhigkeit entspricht der einer polierten oder geläppten Oberfläche.

In einer Wellenleiterverbindung zwischen Wellenleiterende und einer photosensitiven bzw. photoemittierenden Fläche auf dem vorgenannten optoelektronischen Wandler sind zudem optional mindestens eine Spiegelfläche zur Umlenkung, ein Struktur zur Brechung oder Beugung oder eine Streufläche zur Streuung eines Wellenstrahls vorgesehen. Diese Gestaltungen umfassen im Rahmen der Erfindung auch Wellenteiler oder selektive Filter. Insbesondere die Spiegelflächen umfassen auch Spiegelflächen mit einer Teildurchlässigkeit als Wellenstrahlungsteiler, d.h. nicht nur total reflektierende Flächen. Während die Spiegelfläche die vorgenannte optische Qualität aufweist und vorzugsweise über eine Metallisierung zusätzlich verspiegelt ist, weist eine Streufläche eine ausgeprägte gleichmäßige Rauhigkeit oder eine gleichmäßige, aber ungeordnete oder gerichtete Struktur auf, welches einen Wellenstrahl statistisch verteilt ohne oder mit einer Vorzugsrichtung diffus streut. Derartige Gestaltungen zur Streuung von Wellen (Diffusoren) umfassen nicht nur Ebenen, sondern können in der transparenten Wellenleiterverbindung als ungeordnete Partikel eingebunden sein. Wird eine spektroskopische Aufteilung des Wellenlängespektrums eines Wellenstrahls gewünscht, bietet sich der Einsatz der Wellenbeugenden und -brechenden Strukturen an. Auch diese erstrecken sich nicht nur über zweidimensionale ebene Strukturen, sondern können als dreidimensionale Ausbildungen ausgelegt sein.

Das Führungsbauteil ist als Formteil an den vorgenanten photoemittierenden oder photosensitiven Flächen, d.h. den Wandler angesetzt und mit diesen bevorzugt stoffschlüssig verbunden. Bevorzugt erfolgt dies über einen Klebe- oder Schweißverbund, wobei zusätzliche Verbindungsmittel wie z.B. Klebstoff nach der Verbindung einen Durchtritt des Wellenstrahls zulassen, d.h. optisch transparent oder zumindest durchscheinend sind. Eine vollständige Überdeckung der vorgenannten Flächen von dem Führungsbauteil und/oder einem Bindemittel ermöglicht oder begünstigt eine vorteilhafte Ausnutzung der gesamten Fläche für eine optoelektronische Wandlung.

Mehrere optoelektronische Wandler oder ein Array können in einem optoelektronischen Bauelement integriert werden und mit einem entsprechenden Führungsbauteil an mehrere beispielsweise parallel zueinander angeordnete Wellenleiterenden angekoppelt werden.

Die Erfindung wird im Folgenden anhand von Ausführungsformen mit Figuren näher erläutert. Es zeigen
**Fig.1** eine perspektivische Ansicht des optoelektronischen Bauelements einer ersten Ausführungsform, eingesetzt in einer Aussparung einer Leiterplatte,
**Fig.2** den Aufbau der ersten Ausführungsform in einer partiellen Explosionsdarstellung,
**Fig.3** eine weitere perspektivische Ansicht der ersten Ausführungsform mit einem Wellenleiterende,
**Fig.4** eine zweite Ausführungsform mit einem über ein Spritzgussverfahren applizierten Führungsbauteil,
**Fig.5** eine perspektivische Ansicht einer dritten Ausführungsform für die Aufnahme mehrerer Wellenleiterenden,
**Fig.6** eine vierte Ausführungsform mit einem Leadframe als Chipträger,
**Fig.7** die Darstellung einer auf zwei Leiterbahnen applizierten Ausführungsform,
**Fig.8** eine fünfte Ausführungsform für zwei Wellenleiterenden sowie
**Fig. 9 und 10** zwei weitere Ausführungsformen mit zusätzlichen Spiegelflächen zwischen Wellenleiterende und Wandler.

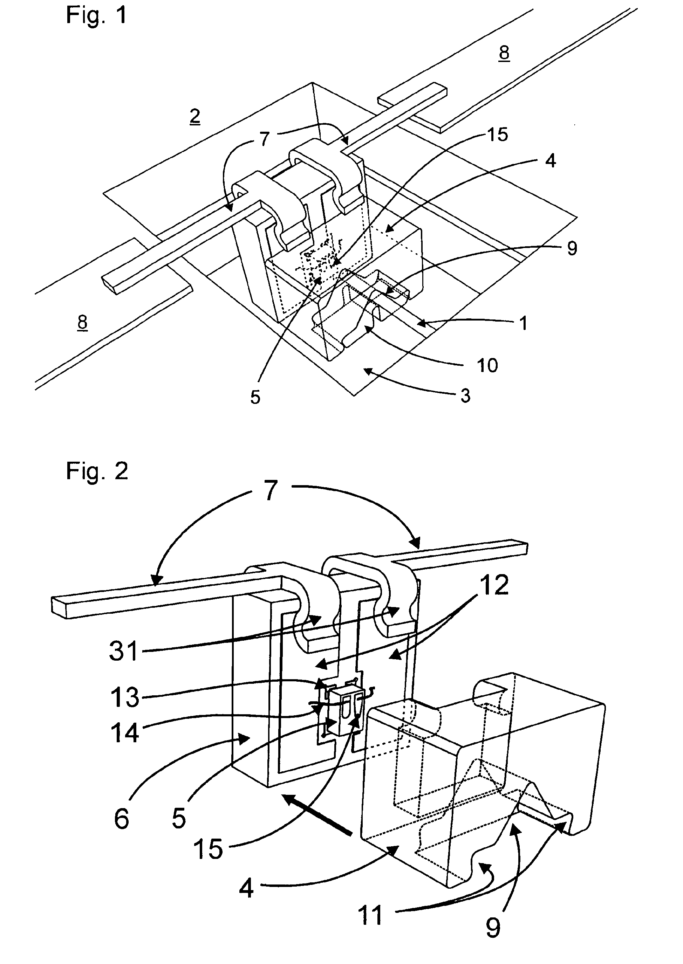

Das optoelektronische Bauelement in den beispielhaft näher erläuterten Ausführungsformen besteht, wie in **Fig.1 bis 10** dargestellt, im Wesentlichen aus einem optoelektronischen Wandler **5,** welcher auf einem Chipträger **6** aufgesetzt ist und über diesen über elektrische Kontakte **7** elektrisch angeschlossen ist. Der optoelektronische Wandler **5** ist von der anderen Seite durch das Führungsbauteil **4** abgedeckt (in **Fig.2** in Explosionsskizze dargestellt). Das Führungsbauteil weist mindestens eine Nut **9** zum Einlegen eines Endstücks eines Wellenleiters **1** auf, wobei das Wellenleiterende in Richtung der photoemittierenden oder photosensitiven Fläche **15** des Wandlers **5** weist. Die Positionierung des Wellenleiterendes in der Nut **9** ist durch einen Clip **10** und einer Haltestruktur **11** arretierbar.

Der optische Wellenleiter **1** kann z.B. in eine Mehrlagen-Leiterplatte **2** integriert und durch eine Öffnung **3** im Leiterplattenmaterial zugänglich sein (vgl. **Fig.1).** Diese Öffnung wird bereits vor dem Verlegen des Lichtwellenleiters in die Leiterplatte eingebracht und erstreckt sich über sämtliche Lagen der Leiterplatte.

Die Führungsbauteil **4** dient einerseits zur passgenauen Aufnahme des optoelektronischen Wandlers **5** (z.B. VCSEL, PIN-Diode) und andererseits zur Führung und anschließenden exakten Positionierung des Bauelements relativ zur Koppelfläche des Wellenleiters.

Die Ausführung des Führungsbauteils unterstützt dabei eine Bestückung mit aktuellen Bestückungsautomaten und gewährleistet eine genaue Positionierung der Sende- und Empfangselemente zum Wellenleiterende ohne aktive Justage.

Das Bauelement besteht aus dem optoelektronischen Wandler **5** (z.B. Laser, Photodiode), einem Chipträger **6** (z.B. aus Keramik, Metall oder Kunststoff) und dem Führungsbauteil **4,** das auch als Gehäuse oder Gehäuseteil dient.

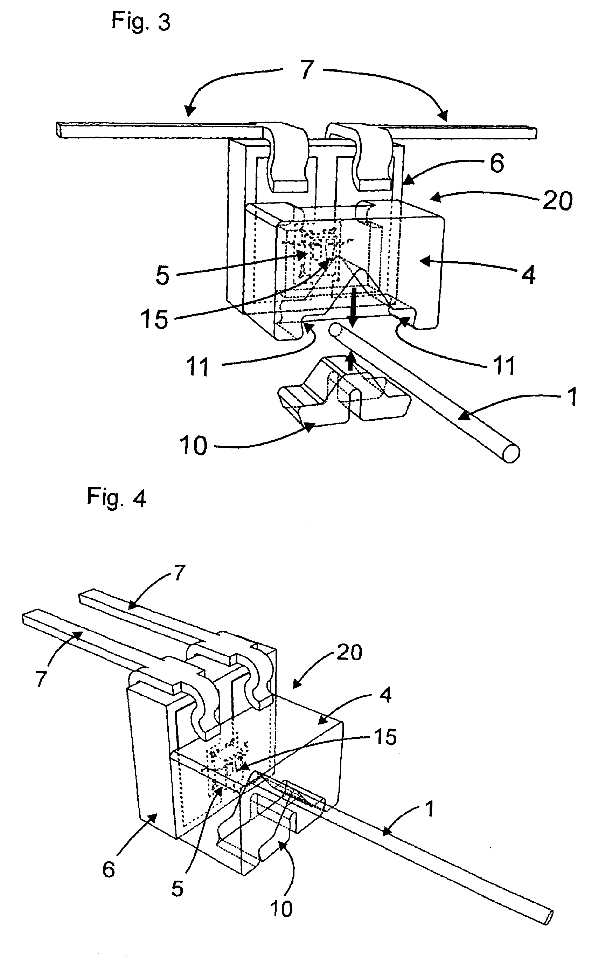

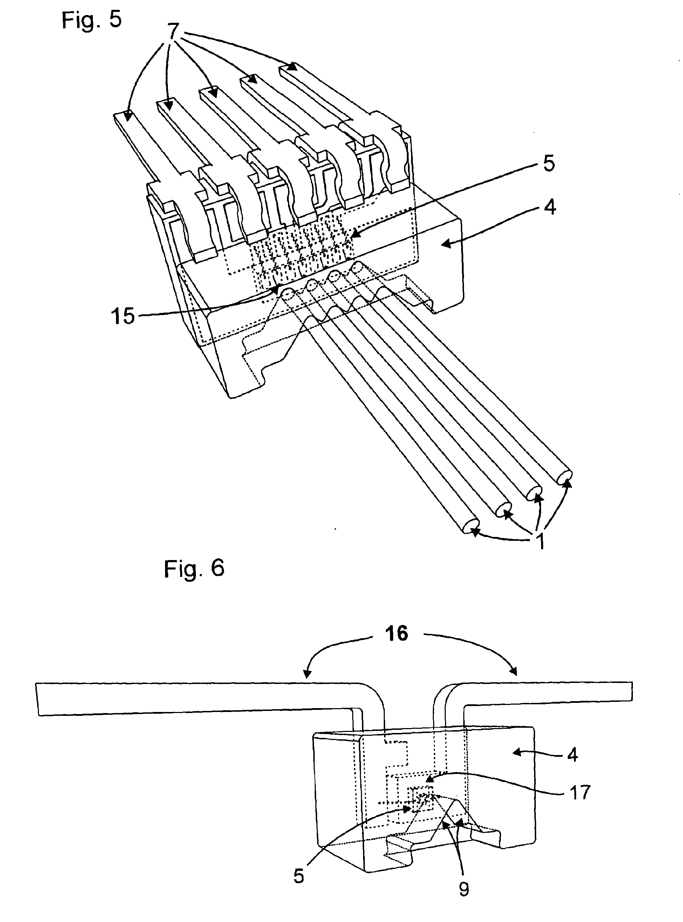

Die elektrischen Anschlüsse **7** sind so ausgeführt, dass sie die Öffnung in der Leiterplatte überbrücken (vgl. **Fig.1),** sich auf geeigneten Kontaktflächen **8** (Leiterbahnen) abstützen und mit diesen verlötet oder verklebt werden. Die elektrischen Anschlüsse können dabei parallel (z.B. **Fig.4 und 5)** oder senkrecht (z.B. **Fig.1 bis 3 und 6 bis 8)** zum Wellenleiter angeordnet werden.

Das Gehäuse des optoelektronischen Bauelements und das Führungsbauteil im Besonderen kann vollständig oder teilweise im Spritzgussverfahren oder mit Prägetechniken aus transparentem Kunststoff hergestellt werden und besitzt eine tiefe Nut **9** (V-Nut in den Ausführungsbeispielen). Bei der Applizierung wird das optoelektronische Bauelement auf dem Wellenleiter (oder umgekehrt) aufgesetzt, wodurch das Wellenleiterende allein durch die Schwerkraft über die Flanken der V-Nut geführt wird und sich an der Spitze der V-Nut einjustiert. Dabei ist es selbstverständlich, dass das optoelektronische Bauteil so konzeptioniert ist, dass sich dessen Schwerpunkt über der Auflagerfläche befindet und es z.B. nicht zu einem Abkippen des Bauteils kommt. Bei der Montage ist somit keine aktive Optimierung der optischen Kopplung zwischen optoelektronischem Bauelement und Wellenleiter mehr notwendig. Die feste Verbindung zwischen Bauelement und Wellenleiter erfolgt durch Verklebung oder durch Einspannen des Wellenleiters mit einem Clip **10,** der in eine geeignete Haltestruktur **11** am Bauelement einrastet und mit ihm zusammen den Wellenleiter einklemmt. Der Clip kann zur langfristigen Sicherung zusätzlich verklebt werden.

**Fig.2** zeigt das Führungsbauteil **4,** d.h. das transparente Kunststoffteil des optoelektronischen Bauelements und einen Chipträger **6** aus Keramik, Kunststoff oder einem anderen geeigneten Material, auf dem Leiterbahnen **12** und Positionierhilfen **13** für den optoelektronischen Wandler aufgebracht sind.

In **Fig.2** ist deutlich die Nut **9** (V-Nut) zu erkennen. Sie dient der Aufnahme und Positionierung des Wellenleiters. Aufgrund der V-Nut-Struktur wird ein grob vorpositionierter optischer Wellenleiter durch eindrücken in die V-Nut in die gewünschte korrekte Lage gebracht, ohne dass eine weitere aktive Justage (Positioniersystem mit Lageerkennung z.B. per Bildverarbeitung) notwendig ist. Auf der Rückseite des Führungsbauteils **4** ist die Aussparung für den optoelektronischen Wandler **5** (z.B. Laserdiode, Photodiode) zu sehen. Die Öffnung am oberen Rand des Rahmens ermöglicht eine vollständige, blasenfreie Verklebung (stoffschlüssige Verbindung) des Bauelements mit dem Chipträger, indem die Aussparung mit z.B. optisch transparentem Klebstoff als Bindemittel gefüllt wird, das Kunststoffteil auf den Chipträger **6** gesetzt und positioniert wird. Dabei kann Luft und überschüssiger Klebstoff durch die Öffnung entweichen. Zwischen Nut und Aussparung für den optoelektronischen Wandler befindet sich eine Trennwand als Teil des Führungsbauteils **4.** Die Trennung dient als Fenster und sorgt für optisch glatte Flächen für einen (nahezu) ungestörten Lichtdurchtritt (der Begriff Licht beinhaltet hier auch die unsichtbaren Teile des elektromagnetischen Spektrums wie Infrarot und Ultraviolett).

Auf dem Chipträger **6** ist ein optoelektronischer Wandler **5** (z.B. Laserdiode, Photodiode) befestigt (z.B. mit geeignetem Klebstoff), wobei optional auf dem Chipträger Positionierhilfen **13** wie Führungen vorhanden sind. Die elektrischen Verbindungen zu den Leiterbahnen **12** sind im Beispiel mit Bonddrähten **14** hergestellt (beispielhaft dargestellt in Fig.2), möglich sind aber bei geeigneten Wandlern auch andere Kontaktierungsmethoden (z.B. Flip-Chip-Bonden, Leitkleber). An der Oberkante sind Metallbeine **7** zum Verlöten des Bauelements mit der Platine angebracht. Im Ausführungsbeispiel umfasst eine mit dem Metallbein verbundene Klammer **31** den Chipträger und ist mit einer Leiterbahn verlötet oder verschweißt.

Die beiden genannten Baugruppen, Führungsbauteil zum einen und Chipträger mit Leiterbahnen, optoelektronischer Wandler mit Anschlussbeinen zum anderen werden miteinander verklebt und bilden das optoelektronische Bauelement. Chipträger und Führungsbauteil bilden somit das umhüllende Gehäuse des optoelektronischen Wandlers. Eine Verklebung dient ferner der Verkapselung des optoelektronischen Wandlers zum Schutz gegen äußere Umwelteinflüsse. Die Positionierung von Führungsbauteil und Chipträger erfolgt so, dass die Nut **9** den optischen Wellenleiter **1** später vor der optisch aktiven Fläche des optoelektronischen Wandlers **5** (z.B. Laserdiode, Photodiode) positioniert.

In **Fig.3** ist u. a. der Clip **10,** mit dem der optische Wellenleiter in der Nut des optoelektronischen Bauelements eingeklemmt wird, dargestellt. Damit wird die korrkte Lage des Wellenleiters sichergestellt. Zur Erhöhung der Langzeitstabilität kann der Clip mit dem optoelektronischen Bauelement verklebt oder verschweißt werden. Der Clip **10** ist in den Ausführungsbeispielen als Negativform der Nut **9** geformt, weist aber einen abgeschnittenen Bereich nahe der oberen Kante zur Bildung eines Hohlraumes für den Wellenleiter auf, damit sich der Wellenleiter bei der Montage nicht an eine Seitenfläche der Nut drücken kann und sich damit in einer falschen Position befinden würde.

Wird bei der Montage des optoelektronischen Bauelements in anderer Weise dafür gesorgt, dass der optische Wellenleiter sich in der korrekten Position befindet und wird der Wellenleiter in dieser Position mit dem Bauelement fest verbunden, kann der Clip auch entfallen.

Die weitere Montage des optoelektronischen Bauelements und des optischen Wellenleiters ist in **Fig.3** angedeutet.

Das optoelektronische Bauelement wird, wie zuvor angeführt, mit der Nut auf das Ende eines optischen Wellenleiters aufgesetzt. Das Ende des Wellenleiters befindet sich direkt vor der Trennung zwischen der Aussparung und der Nut des Kunststoff-Führungsbauteils. In diesem Stadium kann die Position durch ein Werkzeug, das von unten den Wellenleiter in der Nut hält, sichergestellt werden und der Wellenleiter mit dem Bauelement z.B. verklebt werden. Das Werkzeug kann anschließend entfernt werden. Wird ein passender optischer Kleber verwendet, der sich auch zwischen Bauelement und Wellenleiterstirnfläche befindet, lassen sich Reflexionsverluste an den Kunststoff/Glas-Luft-Grenzflächen verringern und somit die Effizienz der Verbindung steigern.

Eine andere Möglichkeit besteht darin, den genannten Clip **10** einzusetzen. Dieser sorgt für die korrekte Positionierung des optischen Wellenleiters in der V-Nut und bildet eine Klemmverbindung zwischen optoelektronischem Bauelement und optischem Wellenleiter 1. Zur Sicherheit und Steigerung der Langzeitstabilität kann diese Verbindung zusätzlich noch verklebt oder verschweißt werden.

Bevor das Bauelement fest mit dem Wellenleiter verbunden wird, dienen die Metallbeine 7 als zusätzliche Auflagepunkte, beispielsweise auf Leiterplattenseitigen Kontaktflächen **8,** die dem Bauelement eine stabile Lage verleihen, da es auf drei Punkten aufliegt (Wellenleiter und Anschlüsse, vgl. **Fig.1).** Werden die Metallbeine fest verlötet, nehmen sie ferner eventuell auf das Bauelement einwirkende Kräfte auf und entlasten den optischen Wellenleiter.

**Fig.1** zeigt eine optische Leiterplatte **2** mit integriertem Wellenleiter **1** und einer Öffnung **3** als Zugang zum Wellenleiter. In dieser Öffnung ist ein optoelektronisches Bauelement mit einem Clip **10** an dem Wellenleiter montiert. Die Metallbeine **7** des Bauelements liegen auf Leiterbahnen **8** auf der Platine und werden mit diesen verlötet.

Die Montage des Bauelements kann automatisch z.B. mit einer SMD-Bestückungsmaschine durchgeführt werden. Die Positionen der elektrischen Kontaktflächen, der Öffnung in der Leiterplatte und des Wellenleiters sind über die Layout-Daten der Leiterplatte bekannt, die Maße des Bauelements werden dem Automaten über eine entsprechende Datenbank mitgeteilt.

Der Bestückungsautomat nimmt das Bauelement aus einem Magazin auf und platziert es an der berechneten Stelle, korrekt ausgerichtet und im vorgegeben Abstand über der Platine bzw. dem Wellenleiter. Dort wird es freigegeben und mit Hilfe der Nut an die exakte Position geführt. Dies kann entweder allein aufgrund der Schwerkraft, die auf das Bauelement wirkt, erfolgen oder durch entsprechende Programmierung mit Unterstützung des Automaten.

Ein Verkippen des Bauteils während der Montage wird durch die elektrischen Anschlüsse **7** des Bauelements, die sich auf den Kontaktflächen **8** auf der Leiterplatte abstützen, verhindert.

Das Bauteil wird dann durch Verkleben oder mit Hilfe des Clips auf dem Wellenleiter gesichert.

Abschließend werden die Anschlüsse auf der Leiterplatte verlötet. Bei entsprechendem Schutz der Koppelfläche und Temperaturbeständigkeit des Führungsbauteils kann auch dieser Schritt automatisch im Lötofen durchgeführt werden.

**Fig.4** zeigt ein optoelektronisches Bauelement, bei dem das Kunststoff-Führungsbauteil nicht mehr mit dem Chipträger verklebt oder verschweißt wird, sondern direkt im Spritzgussverfahren an den Chipträger angespritzt wird. Dabei wird z.B. der Chipträger **6** mit dem Wandler **5** als Einlegeteil in eine Spritzgussform eingesetzt und direkt in das Führungsbauteil **4** eingegossen. Dadurch wird gleichzeitig eine Verkapselung des optoelektronischen Wandlers zum Schutz gegen äußere Umwelteinflüsse erreicht. Als Formteilmaterialien eignen sich grundsätzlich alle optisch transparenten Werkstoffe bevorzugt Gläser und transparente Kunststoffe.

Ein weiterer Vorteil bei entsprechend angepasster elektrischer Kontaktierung (Metallbeine parallel zum Wellenleiter) ist die Anreihbarkeit der optoelektronischen Bauelemente, ohne dass die Stabilität durch die Auflage auf mindestens drei Punkten zu stark beeinträchtigt ist. Damit können auch mehrere optische Übertragungsstrecken parallel auf engem Raum realisiert werden.

Ist der verfügbare Platz für parallele optische Verbindungen noch geringer, kann das optoelektronische Bauelement so abgewandelt werden, dass sich auf dem Chipträger mehrere optoelektronische Wandler oder ein Array befindet mit definierten Abständen zwischen den aktiven Bereichen. Die Führungsbauteil ist dann entsprechend angepasst, um gleichzeitig mehrere parallele Wellenleiter aufzunehmen. Im Beispiel **(Fig.5)** sind vier parallele Wellenleiter dargestellt, das stellt jedoch keinerlei Beschränkung dar. Auch hier ist ein passender Clip 10 in Form einer breiteren Version als der schon bekannten einsetzbar.

**Fig.6** zeigt eine weitere Ausführungsform eines optoelektronischen Bauelements. Hier wird als Chipträger ein sog. Leadframe **16** aus Metall eingesetzt, wie er ähnlich z.B. in der LED-Produktion üblich ist. Dieser Leadframe besteht im Wesentlichen aus zwei Drähten die außen als Anschlussbeine dienen. Ein Draht besitzt eine Fläche **17** zur Montage des optoelektronischen Wandlers und dient auch als elektrischer Kontakt. Der zweite Draht dient als zweiter Anschluss und ist mit dem Wandler z.B. durch einen Bonddraht verbunden. Der Wandler wird im Spritzguss- oder Tauchverfahren so mit Kunststoff umhüllt, dass einerseits der Wandler gekapselt ist und andererseits die Drahtenden mechanisch stabil in den Kunststoffkörper eingebettet sind. Die anderen Enden der beiden Drähte ragen aus dem Kunststoffkörper heraus und dienen der elektrischen Kontaktierung. Der Kunststoffkörper ist so geformt, dass die integrierte Nut den optischen Wellenleiter vor der optisch aktiven Fläche der z.B. Laserdiode oder Photodiode positioniert.

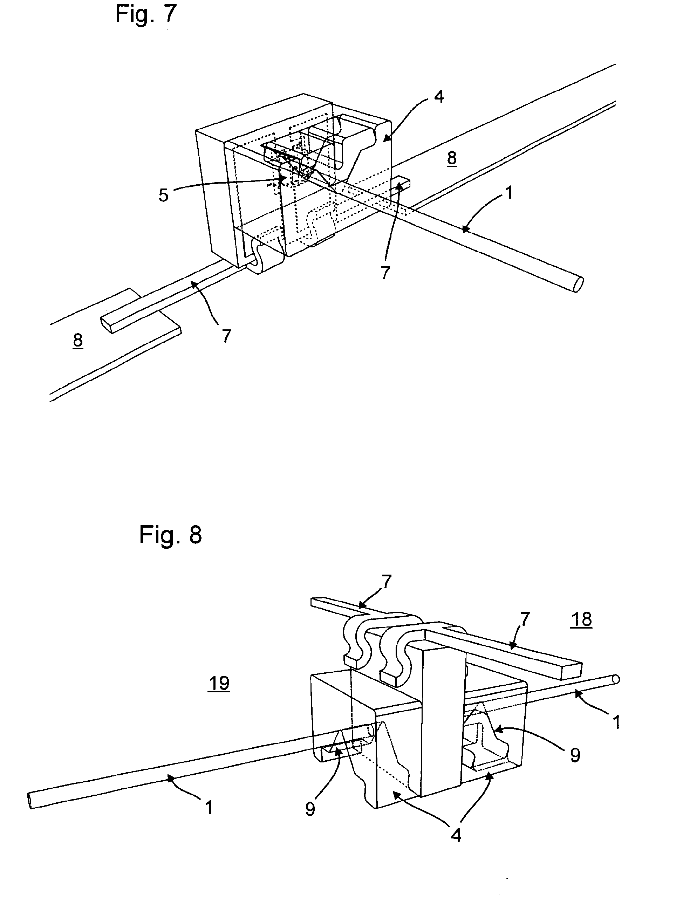

Eine Montagemöglichkeit für die Nutzung offen verlegter Wellenleiter besteht darin, dass das optoelektronische Bauelement mit den elektrischen Anschlüssen nach unten auf einer Platine verlötet und der Wellenleiter später in die dann nach oben hin offene Nut eingelegt und befestigt wird (**Fig. 7**).

Zur Erhöhung der Stabilität und Positioniergenauigkeit, vor allem während der Montage des optoelektronischen Bauelements, kann das Bauelement so gestaltet werden, dass es auf zwei gegenüberliegenden Wellenleiterenden aufliegt, wobei nur eins für die optische Übertragung genutzt wird. Bei entsprechender Erweiterung des optoelektronischen Bauelements (optoelektronische Wandler für beide Wellenleiter) können auch beide Wellenleiter für die optische Übertragung genutzt werden.

**Fig.8** zeigt ein optoelektronische Bauelement mit zwei Auflagen auf zwei optische Wellenleiter (z.B. Glasfasern). Die Wellenleiter sind fluchtend angeordnet mit einer Lücke für das optoelektronische Bauelement. Dieses besitzt nun nicht nur auf der Vorderseite, sondern sowohl auf der Vorder- **18** als auch auf der Rückseite **19** Nuten **9.** Damit sitzt das optoelektronische Bauteil sicherer auf dem optischen Wellenleiter und kann während der Montage nicht von dem Wellenleiter nach hinten herunterkippen. In der Abbildung ist ein Bauelement mit z.B. keramischem Chipträger dargestellt. Die Erweiterung gilt jedoch auch für alle anderen genannten Chipträger und Herstellungsverfahren, insbesondere der Herstellung per Spritzguss mit Draht-Chipträger (Leadframe) in einem Stück. In der Abbildung ist ein möglicher Clip für die Rückseite nicht dargestellt.

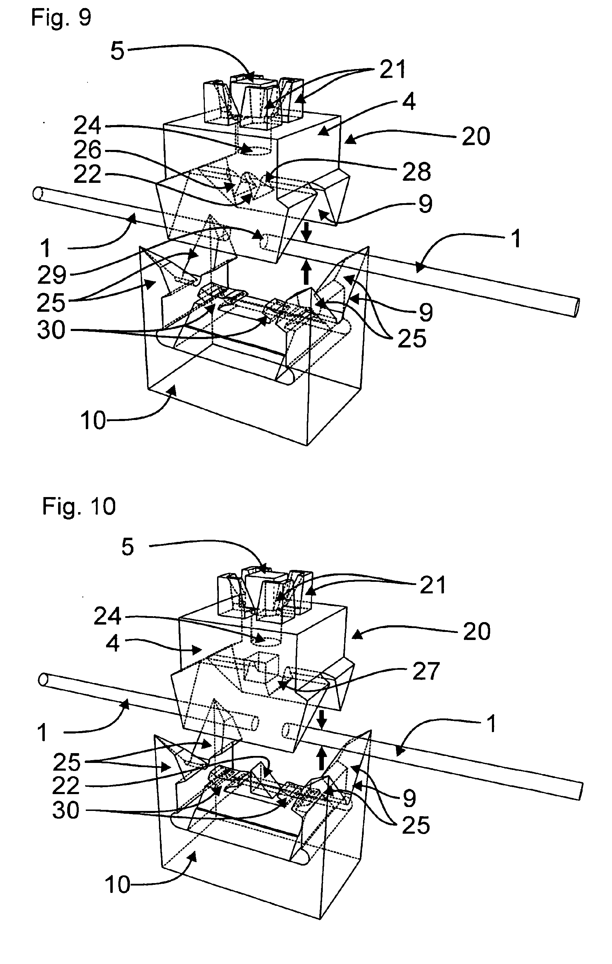

Weitere Ausführungsformen eines optoelektronischen Bauelements, dargestellt in **Fig.9 und 10,** sind so gestaltet, dass das Licht zwischen optoelektronischem Wandler **5** und optischem Wellenleiter **1** einmal umgelenkt wird. Dazu dient z.B. eine Spiegelfläche **22,** es kann aber auch z.B. ein optisches Gitter verwendet werden.

**Fig.9** zeigt eine weitere Variante eines Führungsbauteils aus transparentem Kunststoff. Das Führungsbauteil besitzt eine Nut **9** zur Positionierung auf zwei optischen Wellenleiterenden. Die Licht Ein- und Auskopplung in einen optischen Wellenleiter erfolgt mit Spiegelflächen **22.** Sie befindet sich im montierten Zustand des optoelektronischen Bauelements in der Lücke zwischen den Wellenleiterenden und reflektiert Licht von oben in den Wellenleiter oder Licht aus dem Wellenleiter nach oben. Zur Steigerung der Koppeleffizienz befindet sich zwischen Spiegelflächen und optoelektronischem Wandler eine Linse **24.** Der optoelektronische Wandler wird mit Hilfe der Chiphalterungen **21** positioniert und verklebt oder verschweißt. Zum Schutz der Spiegelflächen vor Kratzern bei der Montage befindet sich hinter den Spiegelflächen ein weiterer Keil **26.** Er sorgt dafür, dass beim Aufsetzen des Führungsbauteils auf die optischen Wellenleiter in keinem Fall die Spiegelfläche berührt und möglicherweise verkratzt wird.

Das optoelektronische Bauelement **20** besteht aus Führungsbauteil und optoelektronischem Wandler. Die Verkapselung des Wandlers kann mit gängigen Materialien zur Verkapselung erfolgen und ist nicht dargestellt. Ebenfalls nicht dargestellt ist die elektrische Kontaktierung des Wandlers. Sie kann durch direktes Bonden auf die Leiterplatte oder mit Hilfe von zusätzlichen Kontaktierungsstrukturen erfolgen.

Zur Montage wird das optoelektronische Bauelement auf die beiden Wellenleiter 1 aufgesetzt und die zur Stirnfläche des optischen Wellenleiters parallele Fläche des Spiegelflächen-Keils **28** an die Wellenleiterstirnfläche **29** angedrückt.

Zur Sicherstellung der gewünschten Lage der optischen Wellenleiter in der V-Nut des optoelektronischen Bauelements gibt es einen Clip 10, der von unten auf das optoelektronische Bauelement aufgesetzt wird, den Wellenleiter mit Federelementen 30 in die Nut drückt und mit entsprechenden Nasen **25** am Bauelement werriegelt wird. Die Verriegelungen besitzen ihrer-seits zur Positionierung an dem Wellenleiter Nuten **9,** was die manuelle oder automatische Montage vereinfacht.

Im montierten Zustand wird der optische Wellenleiter **1** von dem optoelektronischen Bauelement **20** und dem Clip **10** umschlossen und geklemmt. Zur Steigerung der Zuverlässigkeit und Langzeitstabilität können Bauelement und Clip zusätzlich verklebt oder verschweißt werden.

Die Reflektivität der Spiegelflächen **22** muss besonders bei einer Verklebung sichergestellt werden, auch wenn Klebstoff auf die Spiegelfläche gerät und die Totalreflexion stört. Zu diesem Zweck muss die Spiegelfläche metallisiert werden oder einen dielektrischen Spiegel erhalten. Dies gilt auch für z.B. Gitterstrukturen, die für die optische Umlenkung eingesetzt werden können. Andere Einflüsse, die die Totalreflexion stören und damit eine besondere Verspiegelung notwendig machen sind z.B. Verschmutzungen oder kondensierte Flüssigkeiten, die bei der Leiterplattenbestückung oder im späteren Betrieb auftreten.

**Fig.10** zeigt eine weitere Ausführungsform. Da eine selektive Verspiegelung gemäß der Ausführungsform nach **Fig.9** möglicherweise schwierig zu realisieren ist, wird hier ein optoelektronisches Bauelement vorgeschlagen, bei dem sich die Spiegelfläche **22** auf dem Clip befindet.

Das Führungsbauteil ist aus transparentem Kunststoff gefertigt. In diesem Fall besitzt es jedoch keine Spiegelfläche, sondern nur einen Anschlag **27** zur axialen Positionierung des Führungsbauteils auf einem optischen Wellenleiter. Auch hier finden sich wieder eine Linse **24** und Chiphalterungen **21.**

Das optoelektronische Bauelement **20** besteht auch hier aus Führungsbauteil **4** und optoelektronischem Wandler **5.** Die Verkapselung des Wandlers kann mit gängigen Materialien zur Verkapselung erfolgen und ist nicht dargestellt. Ebenfalls nicht dargestellt ist die elektrische Kontaktierung des Wandlers. Sie kann durch direktes Bonden auf die Leiterplatte oder mit Hilfe von zusätzlichen Kontaktierungsstrukturen erfolgen.

Zur Montage wird das optoelektronische Bauelement **20** auf die beiden Wellenleiter **1** aufgesetzt und der Anschlag an die Stirnfläche des Wellenleiters angedrückt über den die optische Übertragung erfolgen soll.

Die gewünschten Lage der optischen Wellenleiter in der Nut des optoelektronischen Bauelements wird mit einem Clip 10 sichergestellt, der von unten auf das optoelektronische Bauelement 20 aufgesetzt wird, den Wellenleiter **1** mit Federelementen 30 in die Nut drückt und mit entsprechenden Nasen **25** am Bauelement verriegelt wird. Die Verriegelungen besitzen ihrerseits zur Positionierung an dem Wellenleiter Nuten **9,** was die manuelle oder automatische Montage vereinfacht. Eine Spiegelfläche **22,** die das Licht aus dem optischen Wellenleiter nach oben zum optoelektronischen Wandler oder umgekehrt Licht vom optoelektronischen Wandler in den Wellenleiter umlenkt, ist in der Mitte des Clips platziert. Durch die Führungsstrukturen an den Verriegelungen wird die korrekte Position der Spiegelflächen sichergestellt. Der Clip muss nur auf der Spiegelfläche verspiegelt sein. Werden auch andere Teile verspiegelt oder undurchsichtig, oder ist der gesamte Clip aus einem undurchsichtigen Material hergestellt, wird seine Funktion in keiner Weise beeinträchtigt.

Im montierten Zustand wird der optische Wellenleiter **1** von dem optoelektronischen Bauelement **20** und dem Clip **10** umschlossen und geklemmt. Zur Steigerung der Zuverlässigkeit und Langzeitstabilität können Bauelement und Clip zusätzlich verklebt oder verschweißt werden. **Literatur:**
[1] K.B.Yoon et. al: Optical Backplane System Using Waveguide-Embedded PCBs and Optical Slots; Journal of Lightwave Technology, Vol.22 (2004), 2119-2127

### Bezugszeichenliste

- 1: Wellenleiter
- 2: Mehrlagen-Leiterplatte
- 3: Öffnung
- 4: Führungsbauteil
- 5: optoelektronischer Wandler
- 6: Chipträger
- 7: elektrischer Anschluss
- 8: Kontaktflächen
- 9: Nut
- 10: Clip
- 11: Haltestruktur
- 12: Leiterbahn
- 13: Positionierhilfe
- 14: Bonddraht
- 15: Fläche
- 16: Leadframe
- 17: Fläche
- 18: Vorderseite
- 19: Rückseite
- 20: optoelektronisches Bauelement
- 21: Chiphalterung
- 22: Spiegelflächen
- 24: Linse
- 25: Nase
- 26: Keil
- 27: Anschlag
- 28: Spiegelflächen-Keil
- 29: Wellenleiterstirnfläche
- 30: Federelement
- 31: Klammer

## Patentansprüche

1. Optoelektronisches Bauelement mit integrierter Ankopplung für mindestens einen Wellenleiter (1) für passive Justage, umfassend
a) mindestens eine photoemittierende oder photosensitive Fläche (15) mindestens eines optoelektronischen Wandlers (5) mit mindestens zwei elektrischen Anschlüssen,
b) mindestens ein Führungsbauteil (4) mit mindestens einer Nut (9) für mindestens ein Wellenleiterende,
c) Wellenleiterverbindungen zwischen den Wellenleiterenden und den photoemittierenden oder photosensitiven Flächen sowie
d) Fixierungsmittel für die Wellenleiterenden in den Nuten,
wobei
e) die Wellenleiterverbindung die Führungsbauteile (4) umfassen,
f) die Führungsbauteile (4) aus einem optisch transparenten Material gefertigt sind sowie
g) die Wellenleiterenden auf Führungsbauteil seitige Wellendurchtrittsflächen fluchten.

2. Optoelektronisches Bauelement nach Anspruch 1, **dadurch gekennzeichnet, dass** die Wellenleiterverbindungen mindestens eine Spiegelfläche zur Umlenkung, eine Struktur zur Brechung oder Beugung oder eine Streufläche zur Streuung eines Wellenstrahls umfassen, welche durch eine Oberfläche eines Führungsbauteils gebildet sind.

3. Optoelektronisches Bauelement nach Anspruch 1 oder 2, **dadurch gekennzeichnet, dass** das Führungsbauteil (4) stoffschlüssig an den Wandler angesetzt ist.

4. Optoelektronisches Bauelement nach Anspruch 3, **dadurch gekennzeichnet, dass** die photoemittierenden und die photosensitiven Flächen (15) von dem Führungsbauteil (4) und/oder einem Bindemittel vollständig überdeckt sind.

5. Optoelektronisches Bauelement nach einem der vorgenannten Ansprüche, **dadurch gekennzeichnet, dass** die Fixierungsmittel eine reversible Verbindung mit Clips (10) umfassen.

6. Optoelektronisches Bauelement nach einem der vorgenannten Ansprüche, **dadurch gekennzeichnet, dass** die beiden elektrischen Anschlüsse (7) mit einem Wellenleiter (1) oder mindestens zwei Wellenleiter (1) in der Nut (9) eine stabile Auflage für das Bauelement bilden.

7. Optoelektronisches Bauelement nach einem der vorgenannten Ansprüche, **dadurch gekennzeichnet, dass** Wellenleiter (1) und Nuten (9) je eine Metalloberfläche zur Erzeugung eines elektrischen Feldes mit einer elektrostatischen Anziehungskraft zwischen Wellenleiter und Nut aufweisen.

8. Optoelektronisches Bauelement nach Anspruch 7, **dadurch gekennzeichnet, dass** die Metalloberflächen durch Metallbeschichtungen gebildet sind.

9. Optischer Wellenwandler, umfassend eine Reihenschaltung von mindestens zwei optoelektronischen Bauelementen nach einem der vorgenanten Ansprüche, wobei ein erstes Bauelement der Wandlung eines Wellensignals in ein elektrisches Signal und ein zweites Bauelement der Wandlung des elektrischen Signals in ein Wellensignal dient.

10. Optischer Wellenwandler nach Anspruch 9, wobei zwischen dem ersten und zweiten Bauelement eine elektronische Schaltung zur Manipulation des elektrischen Signals geschaltet ist.

11. Optischer Wellenwandler nach Anspruch 10, wobei die elektrische Schaltung eine Verstärkereinheit umfasst.
